# EUROPEAN PATENT SPECIFICATION

(11) **EP 1 505 546 B1**
(45) Date of publication and mention of the grant of the patent: **21.04.2010**
(21) Application number: 04018585.2
(22) Date of filing: 05.08.2004
(51) Int. Cl.: G06T 15/70, G06T 17/40, A63F 13/00

(54) **Method for drawing a three-dimensional image by modeling a second object connected to a first object**
Verfahren zum Darstellen eines dreidimensionalen Bildes durch Modellieren eines mit einem ersten Objekt verbundenen zweiten Objektes
Procédé de représenter une image tridimensionelle par modélisation d'un deuxième objet relié à un premier objet

(30) Priority: 06.08.2003 JP 2003287885
(43) Date of publication of application: 09.02.2005
(73) Proprietor: Kabushiki Kaisha Square Enix (also trading as Square Enix Co., Ltd.), Tokyo 151-8544 (JP)
(72) Inventor: Kamiyama, Mitsuru, c/o Square Enix Co., Ltd., Tokyo 151-8544 (JP)
(74) Representative: Grünecker, Kinkeldey, Stockmair & Schwanhäusser Anwaltssozietät

(56) References cited:
- EP-A- 0 825 560
- EP-A- 0 840 256
- US-A- 5 404 426
- US-B1- 6 441 814
- WARD K ET AL: "Modeling hair using level-of-detail representations" COMPUTER ANIMATION AND SOCIAL AGENTS, 2003. 16TH INTERNATIONAL CONFERENCE ON 8-9 MAY 2003, PISCATAWAY, NJ, USA,IEEE, 8 May 2003 (2003-05-08), pages 41-47, XP010639659 ISBN: 0-7695-1934-2
- CHIYI CHENG ET AL: "Physically-based real-time animation of draped cloth" COMPUTER GRAPHICS INTERNATIONAL 2001. PROCEEDINGS 3-6 JULY 2001, PISCATAWAY, NJ, USA,IEEE, 3 July 2001 (2001-07-03), pages 257-264, XP010552325 ISBN: 0-7695-1007-8
- ZHAO ET AL: "Interactive body awareness" COMPUTER-AIDED DESIGN, vol. 26, no. 12, December 1994 (1994-12), pages 861-867, XP000500984

## Description

The present invention relates to computer graphics, for example in video games. More particularly, the present invention relates to a technique for drawing a three-dimensional image by modeling a first object and a second object that independently operate at portions other than their connection point.

A three-dimensional game, which causes an object such as a character and the like to operate in a virtual three-dimensional space and displays an image obtained by perspective-transforming the object by a virtual camera, is common in recent video games. In consideration of the actual world, the object existing in the virtual three-dimensional space must respond to various external forces (for example, wind force). It is an important task in the three-dimensional game to reproduce such an external influence in the operation of the object to create a realistic image.

The article "Modeling Hair Using Level-of-Detail Representations". Computer Animation and Social Agents, 2003 16th International Conference on 8 to 9 May, 2003, New Jersey, USA, IEEE, pages 41 to 47 by K. Ward et al. describes modeling hair in computer graphics. According to the approach applied, motion is dynamically simulated by employing a hierarchy of different levels of detail (called LOD in the article). Levels of detail include strips, clusters and individual strands. Motion is modeled based on a skeleton model. By employing different levels of detail, calculation effort is minimized since the calculation of undesired detail is avoided. For instance, the least detailed level (strip) is employed for those parts of hair that are not visible to the viewer, but nevertheless contribute to the overall appearance due to their volume. The article further describes performing collision detection based on a bounding volume hierarchy (BVH) technique employing swept sphere volumes (SSV).

Document EP-A-0 825 560 describes a method for generating animations and computer graphics (for instance: arms of a person moveable with respect to the rest of the body). A specifically adapted set of generalized coordinates based on angular parameters is defined for efficiently performing the necessary calculations.

The article "Interactive body awareness", Computer-Aided Design, vol. 26, no. 12, December 1994 by Zhao et al. relates to self-collision detection and avoidance for human-like agents in computer graphics. A general approach of collision avoidance is based on simulating a potential field corresponding to a repulsive force (so-called collision response approach). It is further mentioned that for topologically adjacent segments of the body, collision can be avoided by restricting the motion through limiting joint angles.

Unexamined Japanese Patent Publication No. 2003-51030 discloses a method for generating a three-dimensional image that can realistically reproduce a state that clothes, which a character wears, are waving in the wind. In this method, a connection degree where a vertex of each polygon is connected to each bone and a reference amount of movement, which is a maximum value of an amount of movement of a vertex connected for each bone are preset. In this method, an amount of movement of each vertex of each polygon and a direction of movement thereof are obtained based on the set connection degree and reference amount of movement to calculate a position of each polygon.

When the vertex position of the polygon is calculated under the influence of only an external force such as wind by this method, a position, which cannot be present in reality, is calculated as the vertex position of the polygon in some cases. The position, which cannot be present in reality, is a position where a polygon that forms the clothes falls in the body of the character. To avoid this problem, in the field of the computer graphics, there is conventionally known a technique for preventing the polygon from falling in the body of the character by determining collisions using an object for collision detection.

However, this type of collision detection must be performed for each vertex of the polygon and requires extremely large amounts of calculations. In video games, since processing must be executed in real time, when the number of polygons is large, there is a possibility that shortage of calculation time for drawing will occur. In order to avoid this problem, the number of polygons that forms the object may be reduced. However, when the number of polygons is reduced, a curved surface of a drawn image is angulated, resulting in a less realistic image.

In the field of the computer graphics, the operation of the character itself is generally calculated using kinematics and dynamics. In the field of computer graphics, the inverse kinematics and the inverse dynamics are also applied to prevent the character from breaking through a wall and the joint of the character from being bent more than a set amount. However, in the inverse kinematics and the inverse dynamics, the calculation becomes extremely complicated and the number of calculations increases as compared with the kinematics and the dynamics. Though active operations such as walking and running can be calculated by the inverse kinematics and the inverse dynamics, there is a problem that a passive operation such as waving of clothes by the influence of the external force such as wind cannot be appropriately calculated by the inverse kinematics and the inverse dynamics.

An object of the present invention is to draw a three-dimensional image with a small amount of calculation as modeling operations of a first object and a second object, which independently operates at portions other than their connection point.

This is achieved by the features of the independent claims.
FIG 1 is a block diagram illustrating a configuration of a video game apparatus to which an embodiment of the present invention is applied;
FIG. 2 is a view illustrating a configuration of a player character used in a three-dimensional video game according to an embodiment of the present invention;
FIGS. 3A and 3B are views explaining movement of hair of the player character of FIG 2;
FIGS. 4A and 4B are views explaining a reference angle fixed to bones for the hair of the player character of FIG 2;
FIGS. 5A to 5F are views giving explanations of positioning of bones for the hair of the player character of FIG 2 and positioning of each polygon;
FIG. 6 is a flowchart illustrating a main processing in a three-dimensional video game according to an embodiment of the present invention;
FIG 7 is a flowchart specifically illustrating a hair bone position decision processing of FIG 6; and
FIG. 8 is a view illustrating a configuration of another character used in a three-dimensional video game according to an embodiment of the present invention.

An embodiment of the present invention will be specifically described with reference to the drawings. This embodiment shows an example of a case in which the present invention is applied to draw an image of a player character in a three-dimensional video game.

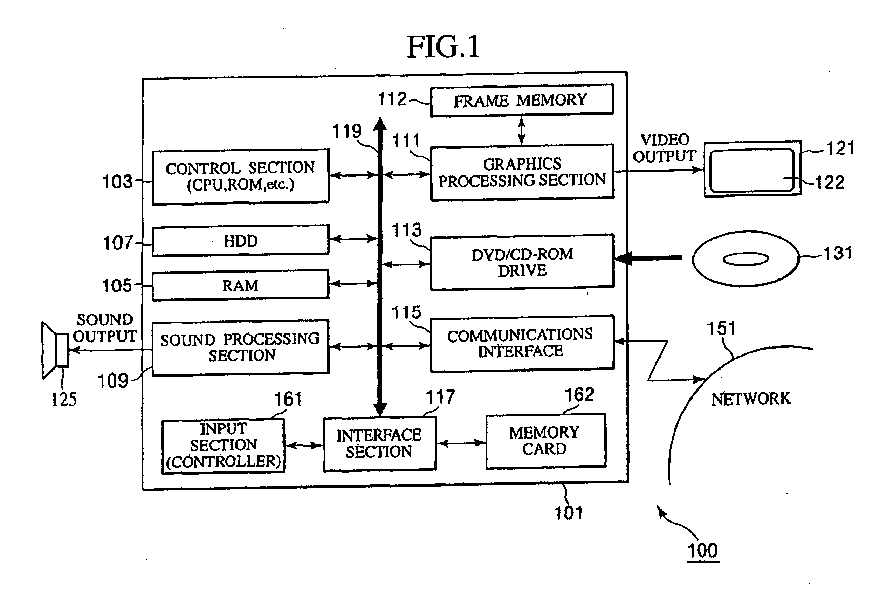

FIG. 1 is a view illustrating a configuration of a video game apparatus 100 that executes a three-dimensional video game according to this embodiment. As illustrated in the figure, the video game apparatus 100 is mainly constructed to include a video game main body 101. The video game main body 101 includes a control section 103, a RAM (Random Access Memory) 105, a hard disk drive (HDD) 107, a sound processor 109, a graphics processor 111, a DVD/CD-ROM drive 113, a communications interface 115, and an interface section 117, which are connected to an internal bus 119.

The sound processor 109 of the video game main body 101 is connected to a sound output device 125, which is a speaker, and the graphics processor 111 is connected to a display device 121 having a display screen 122. A storage medium (DVD-ROM or CD-ROM) 131 can be attached to the DVD/CD-ROM drive 113. The communications interface 115 is connected to a network 151. An input section (controller) 161 and a memory card 162 are connected to the interface section 117.

The control section 103 includes a CPU (Central Processing Unit), a ROM (Read Only Memory), etc., and executes a program stored on the HDD 107 or the storage medium 131 to control the video game apparatus 100. The control section 103 has an internal timer. The RAM 105 is a work area for the control section 103. The HDD 107 is a storage area for storing a program and data. In the case where a program executed by the control section 103 instructs the sound processor 109 to output a sound, the sound processor 109 interprets the instruction and outputs a sound signal to the sound output device 125.

The graphics processor 111 develops an image onto frame memory 112 and outputs a video signal, which displays the image on the display screen 122 of the display device 121 according to a drawing command output from the control section 103. It is assumed that one frame time of the image included in the outputting video signal is, for example, 1/30 sec. The frame memory 112 has areas where images for two frames are developed, and the images are developed alternately in the respective areas for each frame. The DVD/CD-ROM drive 113 reads the program and data from the storage medium 131. The communications interface 115 is connected to the network 151 to perform communications with other computers.

The interface section 117 outputs input data sent from the input section 161 to the RAM 105, and the control section 103 interprets it to carry out arithmetic processing. The input section 161 includes a directional key and multiple operation keys. The directional key is used to move a character (to be described later) and a cursor. The operation button is used to input a predetermined instruction. The interface section 117 forwards data, indicative of the progress of the game stored in the RAM 105, to the memory card 162 based on the instruction from the control section 103. The interface section 117 reads data of the game from the memory card 162 and transfers the read data to the RAM 105 based on the instruction from the control section.

The program and data for performing the game by the video game apparatus 100 are first stored on, for example, the storage medium 131. The program and data are read by the DVD/CD-ROM drive 113 and loaded onto the RAM 105 at the time of execution. The control section 103 processes the program and data loaded onto the RAM 105, outputs a drawing command to the graphics processor 111, and outputs an instruction of a sound output to the sound processor 109. Intermediate data is stored in the RAM 105 while the control section 103 performs processing.

In the three-dimensional video game according to this embodiment, a player operates the input section 161 to move a player character on a field formed in a virtual three-dimensional space, thereby the game is progressed. The virtual three-dimensional space where the field is formed is positioned by a world coordinate system. The field is structured by multiple surfaces, and coordinates of vertexes of the respective structural surfaces are fixed as characteristic points.

A state when wind blows is simulated in the three-dimensional space in which the player character moves. For example, a wind direction and a wind speed for each frame are decided according to a random number obtained for each frame and data of wind direction and wind speed relating to previous several frames.

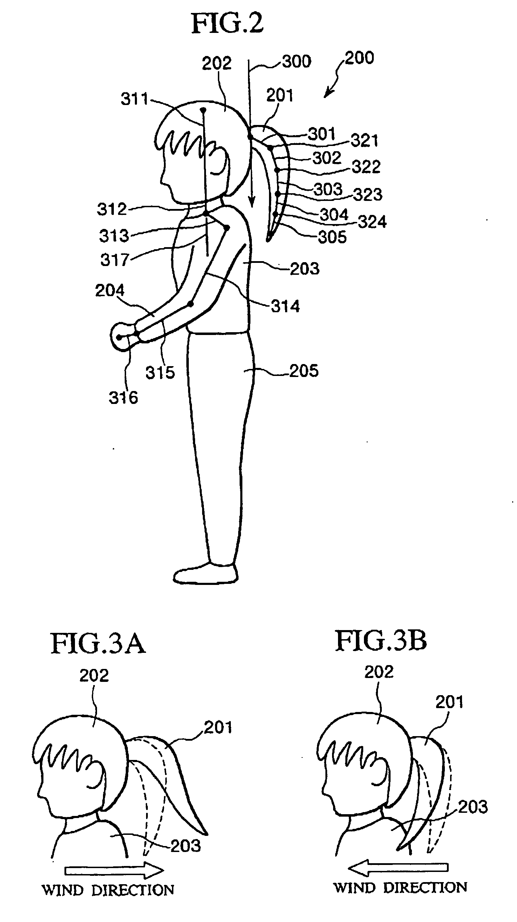

FIG 2 is a view illustrating a configuration of the player character used in this three-dimensional video game. As illustrated in the figure, a player character 200 includes a head 202, a body 203, an arm 204, and a leg 205. Hair 201 in a ponytail style is added to the head 202. Each portion of the player character 200 includes multiple polygons, and the characteristic point (vertex of each polygon) is fixed by the coordinates in a local coordinate system. The portions of the the hair 201 excluding an end portion connected to the head 202 can be moved independently of the movement of the head 202.

In the player character 200, virtual bones 301 to 305 and 311 to 317 are provided. The position of each polygon that forms the player character 200 is decided by the positions of these bones 301 to 305 and 311 to 317. The positions of bones 311 to 317 provided to the portions other than the hair 201 are decided by only a passive operation of the player character 200. The positions of bones 311 to 317 are decided by a conventional method, such as kinematics and dynamics.

The bones 301 to 305 provided to the hair 201 are connected to one another through joints 321 to 324 sequentially, and operate passively upon receiving an external force instead of the active operation of the player character 200. The external force to be added to the hair 201 includes at least gravity reflected by the weight of the hair 201, a kinetic inertial force generated by the operation of the player character 200, and a force caused by wind flowing in the virtual three-dimensional space. Moreover, there is a case that the amount of force differs for each portion. The weight of the hair 201 is preset based on each of the bones 301 to 305 as a unit in order to calculate the positions of the bones 301 to 305. It is assumed that the weight of the hair 201 is low enough to neglect the influence exerted on the passive operation of the player character 200.

An explanation will be next given of movement of the hair 201 of the player character 200. FIGS. 3A and 3B are views each explaining movement of the hair 201. For example, as illustrated in FIG. 3A, when the player character 200 receives the wind from the front, the hair 201 waves in a backward direction of the head 202 and body 203. As illustrated in FIG. 3B, when the player character 200 receives the wind from the back, the hair 201 waves in the direction of the head 202 and body 203. When the player character 200 runs or stops, the hair 201 is operated passively according to the kinetic inertia.

In order to determine the positions of the bones 301 to 305 provided to the hair 201 as described later, a virtual reference axis 300 is set to the player character 200 every time bone positioning is performed. The reference axis 300 is set on a straight line connecting, for example, the position of a connected portion between the hair 201 and the head 202 to a predetermined position, which is a back side of the body 203. When the player character 200 is moved, the reference axis 300 is also moved.

The positions of the bones 301 to 305 provided to the hair 201 that are moved passively as described above can be also calculated using the conventionally used method based on an external force which is passively received according to the kinetic inertia and wind. In addition, when the positions of the bones 301 to 305 are calculated based on the external force, the polygon, which forms the hair 201 positioned according to the bones 301 to 305, may fall in the interior of the head 202 and the interior of the body 203 (this case is hereinafter called a collision) depending on the magnitude of the external force acting on the hair 201.

In order to prevent occurrence of such a collision, an angle formed by the reference axis 300 and the bone 301, an angle formed by the bone 301 and the bone 302, an angle formed by the bone 302 and the bone 303, an angle formed by the bone 303 and the bone 304, and an angle formed by the bone 304 and the bone 305 are respectively fixed within predetermined reference angles. In order to determine the reference angle, there is used a coordinate system in which the direction of the reference axis 300 is an x-axial direction, front and back directions of the player character 200 are a y-axial direction, and right and left directions are a z-axial direction. For example, in the case where the positions of the bones 301 to 305 are obtained by a matrix operation using a vector processor, the matrix operation that moves an X axis of the world coordinate system to the reference axis is performed to determine the reference angle and the X axis can be returned to the original world coordinate system by an inverse matrix operation.

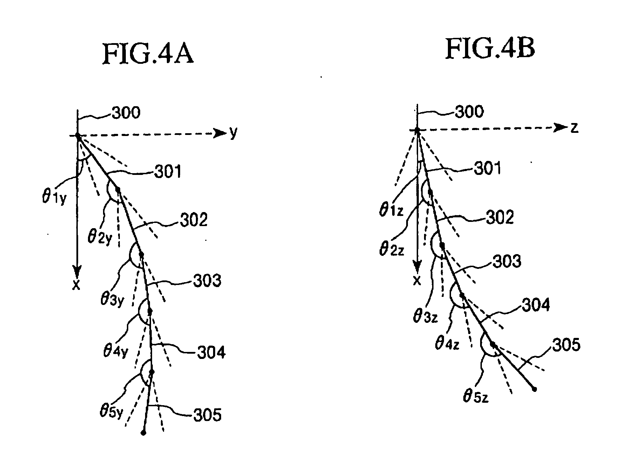

FIGS. 4A and 4B are views each explaining the fixed reference angles of the bones 301 to 305. Since the coordinate system where the direction of the reference axis 300 is used as an x-axial direction, there is no need to determine an x component here. As illustrated in FIG. 4A, reference angles, which are shown by dotted lines, are fixed to a Y component θ1y of an angle formed by the reference axis 300 and the bone 301, a Y component θ2y of an angle formed by the bone 301 and the bone 302, a Y component θ3y of an angle formed by the bone 302 and the bone 303, a Y component θ4y of an angle formed by the bone 303 and the bone 304, and a Y component θ5y of an angle formed by the bone 304 and the bone 305, respectively.

At the time of calculating the positions of the bones 301 to 305, when Y components θ1y, θ2y, θ3y, θ4y, and θ5y of the respective angles exceed the range of the reference angle, the positions of the bones 301, 302, 303, 304 and 305 are corrected to the positions at which reference angles are set. Similarly, as illustrated in FIG 4B, reference angles, which are shown by dotted lines, are fixed to Z components θ1z, θ2z, θ3z, θ4z, and θ5z of the respective angles. Then, when these Z components exceed the range of the reference angles, the positions of the bones 301, 302, 303, 304 and 305 are corrected to the positions at which reference angles are set.

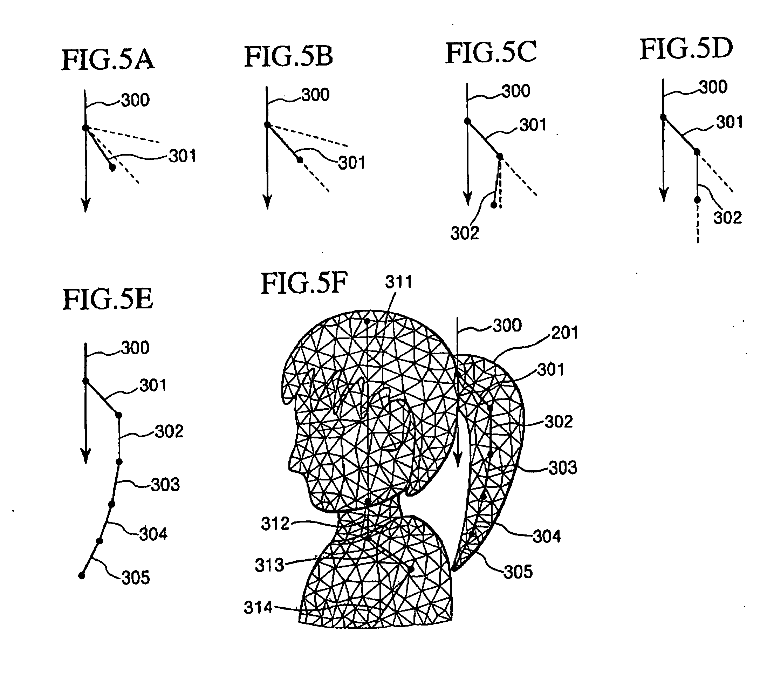

An explanation will be next given of positioning of the bones 301 to 305 and 311 to 317 provided to the player character 200 and positioning of each polygon which forms the hair 201, the head 202, the body 203, the arm 204, and the leg 305. FIGS. 5A to 5F are views each explaining the method for positioning the bones 301 to 305 and 311 to 317 and the positioning of each polygon. Though no explanation is given for separate y components and z components of the respective angles, these components are typically separately calculated.

The positions of the bones 311 to 317 provided to the portions other than the hair 201 are decided by the conventionally used method. When the positions of the bones 311 to 317 are decided, the positions of the polygons, which form the head 202, the body 203, the ann 204, and the leg 305, respectively, are naturally decided. The connected portion between the hair 201 and the head 202 and a predetermined position of the back of the body 203 are obtained, so that the reference axis 300 is set.

When the reference axis 300 is set, the position of the bone 301, which is the closest to the head 202, is calculated according to the external force that the hair 201 receives regardless of the presence of the head 202 and body 203 of the player character 200. Then, an angle θ1 formed by the bone 301 and the reference axis 300 at the calculated position is obtained. As illustrated in FIG 5A, when the calculated angle θ1 exceeds the range of the reference angle shown by the dotted lines, the position of the bone 301 is corrected to the position at which the angle θ1 is set to the reference angle as illustrated in FIG. 5B. The corrected position is set as a position of the bone 301.

After the bone 301 is fixed at the set position, the position of the bone 302 is calculated according to the external force that the hair 201 including the bone 302 and a portion, which is closer to the tip portion than the bone 302, receives regardless of the presence of the head 202 and body 203. Then, an angle θ2 formed by the bone 302 and the bone 301 is obtained at the calculated position. As illustrated in FIG. 5C, when the calculated angle θ2 exceeds the range of the reference angle shown by the dotted lines, the position of the bone 302 is corrected to the position at which the angle θ2 is set to the reference angle. The corrected position is set as a position of the bone 302.

Similarly, as illustrated in FIG. 5E, the positions of the bones 303 to 305 are sequentially set. Accordingly, the positions of all bones 301 to 305 and 311 to 317 of the player character 200 are set. As illustrated in FIG. 5F, the position of each polygon that forms each portion of the player character 200 is decided using only the positions of the bones 301 to 305 and 311 to 317 as a reference.

The coordinates of the local coordinate system, which show the positions of the bones 301 to 305 and 311 to 317 of the player character 200, are transformed to the coordinates of the world coordinate system. The position of vertexes of the respective polygons, which form the player character 200, can be specified according to the position of the bones 301 to 305 and 311 to 317 in the local coordinate system. The coordinates of the local coordinate system, which show the positions of the vertexes of the respective polygons, are also transformed to the coordinates of the world coordinate system.

When the virtual three-dimensional space is perspective-transformed by the virtual camera, an image of the state that the player character 200 moves on the field in the virtual three-dimensional space is projected on the display screen 122 and recognized by the player. An image, which is projected on a virtual screen from the virtual camera placed in the virtual three-dimensional space, becomes an image that is displayed on the display screen 122. In order to project the image on the virtual screen, a viewing coordinate system is used, and the coordinates of the world coordinate system are transformed to the coordinates of the viewing coordinates.

In order to generate an image projected on the virtual screen by perspective-transformation, there is a need to perform hidden surface removal that removes a surface hidden by another object placed in front. A Z buffer method is used as the hidden surface removal method. After transforming the coordinates of the world coordinate system to the coordinates of the viewing coordinate system, the control section 103 sends the coordinates of each characteristic point to the graphics processor 111 and outputs a drawing instruction thereto. The graphics processor 111 updates the contents of a Z buffer to leave data of a point existing in the front side in connection with each characteristic point based on the drawing instruction. Then, the graphics process 111 develops image data of the relevant characteristic point onto the frame memory 112 every time data of the Z buffer is updated.

The following will explain processing in the three-dimensional video game according to this embodiment. In order to simplify the explanation, it is assumed that an object, which is operated in the virtual three-dimensional space, is only the player character 200. The explanation of processing other than processing particularly relating to the present invention may be omitted. Actually, a vector operation is used to decide the positions of the bones 301 to 303 and 311 to 317 and the polygons. A sine, a cosine, or a tangent are used to determine the angles.

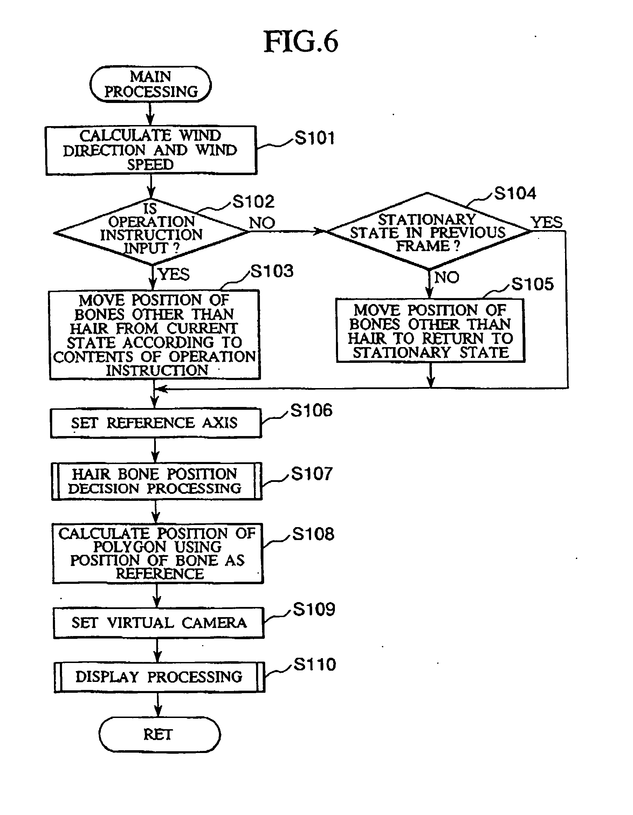

FIG. 6 is a view illustrating a main processing in the three-dimensional video game according to an embodiment. The main processing generates an image corresponding to one frame and is performed by timer interruption every 1/30 second. The main processing may be performed by timer interruption every single field period (1/60 second) or every two frames (1/15 second) depending on the amount of processing.

In the main processing, the control section 103 obtains random numbers for deciding the wind direction and wind speed by executing a random function, and calculates the wind direction and wind speed of the relevant frame according to the obtained random numbers and data of the wind direction and the wind speed relating to several previous frames (step S101). The calculated data of the wind direction and wind speed are stored in a predetermined area of the RAM 105 for the latest several frames.

The control section 103 determines whether an instruction for operating the player character 200 by the player is input from the input section 161 (step S102). When the instruction for operating the player character 200 is not input, the control section 103 determines whether the player character 200 is in a stationary state in the previous frame (step S104). When the player character 200 is in the stationary state, the processing flow proceeds to step S106 directly.

When the instruction for operating the player character 200 is input in step S 102, the control section 103 moves the positions (world coordinate system) of the bones 311 to 317 provided to the portions other than the hair 201 of the player character 200 according to the instruction content of the operation from the current state (namely, state according to the bones 311 to 317 decided in the previous frame). In this case, the control section 103 considers the positions of the bones 311 to 317 in the previous several frames in order to express a state that movement of the player character 200 is accelerated (sep S103). Then, the processing flow proceeds to step S106.

When the player character 200 is not in the stationary state in step S104, the control section 103 moves the positions (world coordinate system) of the bones 311 to 317 provided to the portions other than the hair 201 of the player character 200 to return the current state to a predetermined stationary state. In this case, the control section 103 considers the positions of the bones 311 to 317 in the previous several frames to prevent the player from feeling that something is different by stopping the player character 200 rapidly (step S105). Then, the processing flow proceeds to step S106.

In step S106, the control section 103 sets the reference axis 300 for detecting the positions of the bones 301 to 305 provided to the hair 201 based on the positions of the bones 311 and 317 of the player character 200 moved in step S103 or S105 or those that are not moved from the previous frame. When the positions of the bones 311 to 317 provided to the portions other than the hair 201, which is not subjected to the influence of the external force, and the position of the reference axis 300 are detected, the control section 103 performs hair bone position decision processing for detecting the positions of the bones 301 to 305 provided to the hair 201 (step S107).

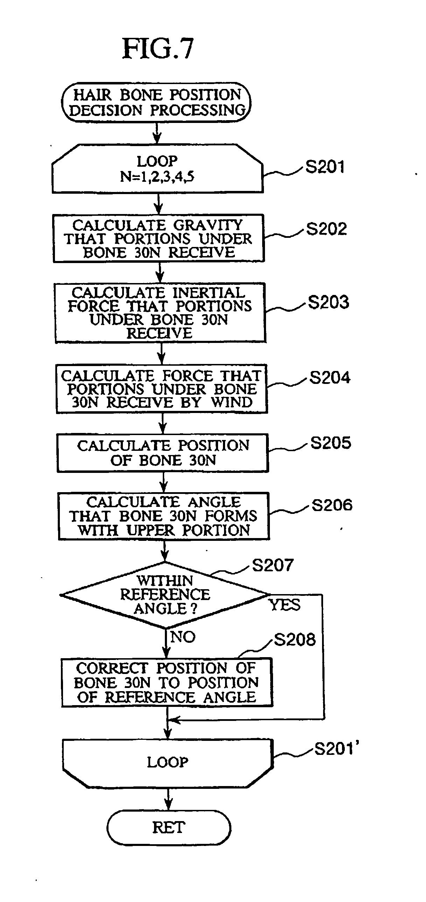

FIG. 7 is a flowchart specifically illustrating the hair bone position decision processing. In order to simplify the explanation, it is assumed that the force applied to the hair 201 of the player character 200 includes only gravity, i.e., the weight of the hair 201, a kinetic inertial force according to the operation of the player character 200 and force received by the wind flowing in the virtual three-dimensional space. In the hair bone position decision processing, the control section 103 performs loop processing by changing a value of N to 1, 2, 3, 4, and 5 sequentially (step S201 to S201').

In the loop, the control section 103 calculates gravity received by portions including bone 30N and thereunder in the hair 201 of the player character 200 (step S202). The control section 103 calculates a kinetic inertial force received by the portions including bone 30N and thereunder in the hair 201 based on the position in the current frame and the position in the previous frame in connection with the bone of the head 202 to which the hair 201 is connected (step S203). The control section 103 calculates force, which the portions including bone 30N and thereunder in the hair 201 receive by the wind flowing in the virtual three-dimensional space, according to the wind speed and wind direction calculated in step S101 (step S204).

The control section 103 calculates a position of the bone 30N (world coordinate system) based on all forces received by the portions including bone 30N and thereunder in the hair 201 calculated in steps S202 to S204. At the time of calculating the position of the bone 30N, reference is made to the position of the bone 30N in the previous frame (step S205). The control section 103 calculates a y component and a z component in a coordinate system where the direction of the reference axis 300 is an x-axial direction in connection with an angle that the bone 30N forms with an upper portion (which is reference axis 300 when the bone 30N is 301 and which is each of bones 301 to 304 when the bone 30N is each of bones 302 to 305) (step S206).

The control section 103 determines whether both y component and z component of the angle that the bone 30N forms with the upper portion are within the range of the reference angle (step S207). When both the y component and z component are within the range of the reference angle and the value of N is not changed up to 5, the control section 103 updates the value of N to perform processing in the loop again. When both the y component and z component are within the range of the reference angle and the value of N is incremented to 5, the processing in this flowchart ends and processing returns to the processing in FIG. 6.

When either the y component or z component of the angle is not within the range of the reference angle, the control section 103 corrects a position (world coordinate system) of the bone 30N to the position where both the y component and z component of the angle that the bone 30N forms with the upper portion are at the reference angle (step S208). When the value of N is not yet incremented to 5, the control section 103 updates the value of N to perform processing in the loop. When the value of N is already incremented to 5, the processing in this flowchart ends and processing returns to the processing in FIG 6.

Returning to the explanation of FIG. 6, the control section 103 calculates the position (world coordinate system) of the vertex of each polygon that forms each of the portions 201 to 205 of the player character 200 with reference to the positions of the bones 301 to 305 and 311 to 317 of the player character 200 decided in the steps up to S107. More specifically, when the positions of the bones 301 to 305 and 311 to 317 in the local coordinate system are specified, the positions of the vertexes of the respective polygons in the local coordinate system are naturally specified. The control section 103 may transform the coordinates of each polygon in the local coordinate system to the coordinates of the world coordinate system (step S108). There is no need to calculate the positions (world coordinate system) of the vertexes of the polygons that form the portions other than the player character 200 in the virtual three-dimensional space since these positions are fixed.

When the position (world coordinate system) of the vertex of each polygon that forms each of the portions 201 to 205 of the player character 200 is calculated, the control section 103 determines a viewpoint position, a direction of a visual axis, and a magnitude of a visual angle as required, and sets a virtual camera for performing perspective-transformation. The conventional method may be applied to processing for setting the virtual camera (step S109).

When the virtual camera is set and the viewpoint and an optical axis are decided, the control section 103 perspective-transforms the virtual three-dimensional space including the player character onto the virtual screen by the virtual camera, and performs display processing for generating a two-dimensional image to be displayed on the display screen 122 (step S110). When the display processing ends, the control section 103 ends the main processing. The main processing is executed again with start timing of a next frame period.

A brief explanation will be next given of display processing in step S110. Among the coordinates of the vertexes of the respective polygons that form the virtual three-dimensional space including the player character 200, the control section 103 transforms the coordinates of the vertex of each polygon included in a range, which is at least perspective-transformed onto the virtual screen, from the coordinates of the world coordinate system to the coordinates of the viewing coordinate system. The control section 103 sends the coordinates of the vertex of each polygon transformed to the viewing coordinate system to the graphics processor 111, and outputs a drawing command to the graphics processor 111.

In connection with the respective pixels that form the respective surfaces, the graphics processor 111, which has received the drawing command, updates the contents of the Z buffer to leave data of a polygon existing in the front side based on the coordinates of the viewing coordinate system. When the contents of the Z buffer are updated, the graphics processor 111 develops image data of the relevant pixel onto the frame memory 112. The graphics processor 111 also executes processing such as shading, texture mapping and the like to image data to be developed.

The graphics processor 111 reads image data developed onto the frame memory 112, sequentially, and adds a synchronization signal thereto to generate a video signal, and outputs the video signal to the display device 121. The display device 121 displays an image corresponding to the video signal output from the graphics processor 111 on the display screen 122. The image on the display screen 122 is switched every single frame period, so that the player can view the image including the player character 200 moving on the field and the hair 201 moving in response to the external force.

As explained above, in the three-dimensional video game according to this embodiment, the hair 201 of the player character 200 moves under the influence of the external force separately from the operation of the player character 200. However, a magnitude of the received external force differs from portion to portion. Five bones 301 to 305 are provided to the hair 201 and a receiving force for each portion corresponding to each bone is calculated. Accordingly, the amount that the hair 201 is moved in response to the external force for each portion can be reproduced realistically.

If the angle, which each of the bones 301 to 305 forms with the upper portion (reference axis 300 or bones 301 to 304), is calculated based on only the magnitude of the external force received by the hair 201 of the player character 200, any angle may be logically possible. Regarding the angle, which each of the bones 301 to 305 forms with the upper portion, a reference angle at which the hair 201 does not collide with the other portion of the player character is predetermined. The positions of the bones 301 to 305 are corrected to be at the reference angle when the angle that each bone forms with the upper portion is not in the range of the reference angle by the calculation based on the external force. As a result, the positions of the bones 301 to 305 provided to the hair 201 are guaranteed to be located where collisions cannot occur. Thus, such a phenomenon that the polygon forming the hair 201 falls in the other portion of the player character 200 does not occur in the image displayed on the display screen 122.

When the angle, which each of the bones 301 to 305 provided to the hair 201 forms with the upper portion, exceeds the range of the reference angle, the positions of the bones 301 to 305 are corrected to the reference angle. For this reason, when the force applied to the hair 201 is large, it is possible to express movement according to the magnitude of the force as much as possible. Namely, movement of the hair 201 can be expressed to a maximum in the range where no collision occurs, so that a realistic image can be displayed on the display screen 122.

A collision between the hair 201 and the other portion of the player character 200 is determined at the time of drawing the image according to the angle, which each of the bones 301 to 305 forms with the upper portion. This may eliminate the need for using an object for collision detection that is not originally present in the virtual three-dimensional space. The lack of need for the collision detection object-can be applied to not only the bone 301 connected to the head 202 but also the bones 302 to 305.

In the video game according to this embodiment, collision detection for preventing collision of the hair 201 is only performed for the bones 301 to 305. If the positions of the bones 301 to 305 provided to the hair 201 are decided, the positions of the vertexes of the respective polygons that form the hair 201 can be decided based on the decided positions of the bones 301 to 305. In other words, since collision detection does not have to be performed for each vertex of the polygon, the amount of calculations required for collision detection can be reduced.

Since the collision detection is not performed for each vertex of the polygon, even if the number of polygons included in the range to be perspective-transformed becomes large, the amount of calculations is not largely increased by the increase in the number of polygons. This makes it possible to reduce the size of each of the polygons that form the object existing in the virtual three-dimensional space including the player character 200. An image, which is perspective-transformed and displayed on the display screen 122, can be a realistic image that expresses a curvature smoothly.

Regarding each of the bones 301 to 305 provided to the hair 201 of the player character 200, such a reference angle at which no collision occurs is predetermined and the position of each of the bones 301 to 305 is decided to be in this range. Accordingly, this makes it possible to appropriately model the operation of an object, such as the hair 201 which is influenced by an external force and which is not a good candidate for calculation based on the inverse kinematics and the inverse dynamics.

In the video game according to this embodiment, since the image is drawn by timer interruption for one frame, drawing processing of the image in the relevant frame must be finished during one frame period. The detection of collisions between the hair 201 and the other portion of the player character is performed only for the positions of the bones 301 to 305, so that a large amount of calculations is not required. Since a large number of polygons can be processed during one frame period, the number of polygons that forms the player character 200 can be relatively increased to reproduce a natural curvature.

The present invention is not limited to the aforementioned embodiment and various modifications and applications may be possible. The following will explain the modification of the above embodiment that is applicable to the present invention.

The aforementioned embodiment explained the case in which the present invention was applied for modeling the operation of the hair 201 of the player character 200. However, the object in which the image is drawn by applying the present invention is not limited to the aforementioned embodiment. If an object is one that is connected to another object and operated independently of the relevant other object at the portion other than the connection point, an image can be drawn for the other kind of object by applying the present invention. Regarding the number of bones included in the object, any number, which is one or more, can be applied. The object may be one that is connected to the other object at two portions. The present invention can be applied to a case in which an operation of a wide object is modeled as well as a narrow object such as hair 201.

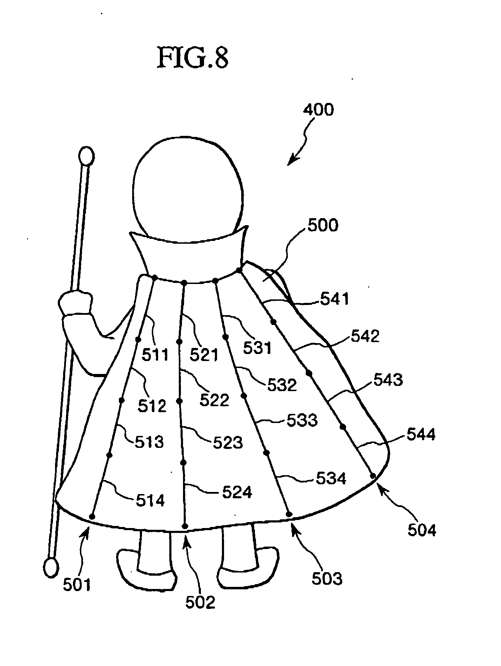

FIG 8 is a view illustrating a configuration of a character having a wide object. A character 400 wears a cloak as a wide object. Since it is difficult to express an operation of the cloak 500 by only a series of bones, a set of bones 501 including bones 511 to 514, a set of bones 502 including bones 521 to 524, a set of bones 503 including bones 531 to 534, and a set of bones 504 including bones 541 to 544 are provided to the cloak 500. Individual reference axes may be provided to the sets of bones 501 to 504, respectively. A common reference axis may be provided to the sets of bones 501 to 504. The multiple sets of bones 501 to 504 are provided in this way to make it possible to apply the present invention even when an image of the wide object such as the cloak 500 is drawn.

In the aforementioned embodiment, the reference axis 300 was provided separately from the bones 311 to 317 provided to the portions other than the hair 201 of the player character 200. However, the reference axis may be provided to any one of the bones (particularly, the bone 311 of the head 202 to which the hair 201 is connected). In the case where the tip portion of the hair 201 reaches only a certain range of the head 202 without reaching the back of the player character 200, this is especially useful since the reference axis can be easily provided.

In the aforementioned embodiment, the hair 201 of the player character 200 moves under the inertial force of the motion due to the operation of the player character 200, the force of the wind flowing into the virtual three-dimensional space, and the gravity due to its own weight. However, the hair 201 of the player character 200 may move in response to another kind of external force. For example, another character may be operated to bit the player character 200 on the hair 201 with its hand or a weapon. In this case, determination of the collision with another character's hand or weapon-can be executed with reference to the positions of the bones 301 to 305.

The aforementioned embodiment explained the case in which the present invention was applied at the time of drawing the image of the object, which was passively operated by the external force. However, the present invention can be applied at the time of drawing the image of the object, which operates actively as in the character's hand and leg, and the image of the object, which operates actively and is operated passively by the external force.

The aforementioned embodiment was explained on the assumption that the bones included in the object (specifically, the hair 201) were linearly shaped. However, curved bones may be included in the object. An angle, which each bone forms with the reference axis or the upper portion, can be calculated by a tangent at both ends of each bone.

In the aforementioned embodiment, it was determined whether the hair 201 collided with the other portion of the player character 200 depending on whether the angle, which each of the bones 301 to 305 provided to the hair 201 formed with the upper portion, was in the range of the reference angle. The collision detection can be actually performed for only the bones 301 to 305 provided to the hair 201 using the object for collision detection. After the positions of the bones 301 to 305 are given by the detection result using the object for collision detection, the position of each polygon may be decided according to only the positions of the given bones 301 to 305.

In the aforementioned embodiment, the video game apparatus 100, which was a special-purpose machine, was used as a platform. In contrast to this, any apparatus such as a general-purpose computer may be used if the apparatus includes the same structural components as those of the video game main body 101 and a function of drawing a three-dimensional image. Moreover, a portable video game apparatus, which contains the display device 121 and the sound output device 125 in the same cabinet as that of the video game main body 101, may also be used.

A semiconductor memory card may be used as the storage medium 131 in place of a DVD-ROM or CD-ROM. In the video game apparatus main body 101 or the portable game apparatus, a card slot for inserting the memory card may be formed in place of the DVD/CD-ROM drive 113. In the case of the general-purpose personal computer, the program and data relating to the present invention may be prestored to the HDD 107 instead of being stored to the storage medium 131. Regarding the storage medium for storing the program and data relating to the present invention, any storage medium may be used according to the physical form of hardware and the distribution thereof.

The program for executing the video game of the present invention may be stored on a fixed disc apparatus provided in a Web server apparatus existing on the network 151. The Web server apparatus may convert the program and data stored in the fixed disc apparatus to a signal and superimpose the signal on a carrier wave, and distribute it to the video game main body 101 via the network 151 and the communications medium 141. The program, which the communications interface 115 received from the Web server apparatus, can be stored in the HDD 107 and loaded to the RAM 105 at an executing time.

The aforementioned embodiment explained the case in which the present invention was applied to draw the image of the game in the three-dimensional video game. However, the present invention can be used in the field of the computer graphics processing for drawing a three-dimensional image without being limited to the three-dimensional video game. The present invention is particularly suitable for use in the field of the three-dimensional computer graphics processing for drawing a three-dimensional image with real time. Even if this is not one that is applied as a part of the program of the video game, a program including a function of drawing the three-dimensional image as mentioned above can be distributed by the same method as that of the program for the video game.

Although the invention has been described with reference to several exemplary embodiments, it is understood that the words that have been used are words of description and illustration, rather than words of limitation. Changes may be made within the purview of the appended claims without departing from the scope of the invention in its aspects. Although the invention has been described with reference to particular means, materials and embodiments, the invention is not intended to be limited to the particulars disclosed; rather, the invention extends to all functionally equivalent structures, methods, and uses such as are within the scope of the appended claims.

## Claims

1. A three-dimensional image drawing apparatus for drawing a three-dimensional image by modelling a first object (202) and a second object (201; 500) that move in a virtual three-dimensional space, and the second object (201; 500) is connected to the first object (201) and includes a bone (301-305; 511-514, 521-524, 531-534, 541-544), the second object (201; 500) moving independently of the first object (202) at a portion other than a connection point, comprising:
a bone position calculator (103) for calculating a position of the bone (301-305; 511-514, 521-524, 531-534, 541-544) included in the second object (201; 500) when the second object (201; 500) moves according to a predetermined operation condition; and
an image rendering system (103, 111, 112);
**characterized in that**
said bone (301-305; 511-514, 521-524, 531-534, 541-544) defines display positions of multiple polygons; and by further comprising
a reference axis coordinate system setting means (103) for setting a reference axis coordinate system (x, y, z) that is a three-dimensional coordinate system, one of the three axes of the reference axis coordinate system (x, y, z) being set as a reference axis (300) with reference to the first object (202), the reference axis coordinate system (x, y, z) being different from the coordinate system of the virtual three-dimensional space;
a collision detector (103) for determining whether the second object (201; 500) is where no collision with the first object (202) occurs, based upon the calculated position of the bone (301-305; 511-514, 521-524, 531-534, 541-544); wherein said collision detector (103) includes an angle determiner for determining whether an angle, which the bone (301-305; 511-514, 521-524, 531-534, 541-544) included in the second object (201; 500) forms with the reference axis (300) set with reference to the first object (202), is within a range of a reference angle predetermined as an angle at which no collision with the first object (202) occurs, according to calculations using the reference axis coordinate system (x, y, z);
a bone position corrector (103) for recalculating the position of the bone (301-305; 511-514, 521-524, 531-534, 541-544) included in the second object (201; 500) to be where no collision with the first object (202) occurs when the second object (201; 500) is determined as being where collision with the first object (202) occurs; and
a polygon position calculator (103) for calculating a position of each of the multiple polygons that form the second object (201; 500) with reference to the position of the bone (301-305; 511-514, 521-524, 531-534, 541-544), which is located where no collision with the first object (202) occurs; and **in that**
said image rendering system (103, 111, 112) drawing the multiple polygons that form the second object (201: 500) according to the positions calculated by the polygon position calculator (103) to create an image (200; 400) where the first and second objects are modelled.

2. The three-dimensional image drawing apparatus according to claim 1, wherein the bone position corrector (103) recalculates the position of the bone (301-305; 511-514, 521-524, 531-534, 541-544) included in the second object (201; 500) to be where the angle matches the reference angle when the angle determiner determines the angle is not within the range of the reference angle.

3. The three-dimensional image drawing apparatus according to claim 1 or 2, wherein the second object (201; 500) is passively moved in response to a force applied externally.

4. The three-dimensional image drawing apparatus according to any of claims 1 to 3,
wherein the second object (201; 500) includes a first bone (301; 511, 521, 531, 541) that is directly connected to the first object (202) and a second bone (302; 512, 522, 532, 542) that is directly connected to the first bone (301; 511, 521, 531, 541) and is not directly connected to the first object (202); and
wherein the collision detector (103) includes:
a first angle determiner for determining whether an angle, which the first bone (301; 511, 521, 531, 541) forms with a reference axis (300), is within a range of a first reference angle;
a second angle determiner for determining whether an angle, which the second bone (302; 512. 522, 532, 542) forms with the first bone (301; 511, 521, 531, 541), is within a range of a second reference angle; and
determines that the second object (201; 500) is where no collision with the first object (202) occurs when the first and second angle determiners determine that the angles are within the first and second angle ranges, respectively.

5. The three-dimensional image drawing apparatus according to claim 4, wherein the bone position calculator (103) includes:
a first bone position calculator for calculating a position of the first bone (301; 511, 521, 531, 541) according to a force applied to portions corresponding to the first bone (301; 511, 521, 531, 541) and the second bone (302; 512, 522, 532, 542) of the second object (201; 500); and
a second bone position calculator for calculating a position of the second bone (302; 512, 522, 532, 542) according to a force applied to a portion corresponding to the second bone (302; 512, 522, 532, 542) of the second object (201; 500).

6. The three-dimensional image drawing apparatus according to claim 5, wherein the second bone position calculator calculates the position of the second bone (302; 512, 522, 532, 542) with reference to the recalculated position of the first bone (301; 511, 521, 531, 541) when the position of the first bone (301; 511, 521, 531, 541) is recalculated.

7. The three-dimensional image drawing apparatus according to any of claims 1 to 6,
wherein the first object (202) comprises multiple polygons and includes at least one bone (311) that defines the display positions of the multiple polygons;
wherein the apparatus further comprises:
a first object bone position calculator (103) for calculating a position of the at least one bone (311) included in the first object (202) when the first object (202) moves according to a predetermined operation condition different from the operation condition of the second object (201; 500); and
a reference axis setting section (103) for setting the reference axis (300) according to the position of the at least one bone (311) included in the first object (202); and
wherein the collision detector (103) determines whether the second object (201; 500) is where no collision with the first object (202) occurs according to a positional relationship between the bones (301-305; 511-514, 521-524, 531-534, 541-544) included in the second object (201; 500) and the reference axis (300).

8. The three-dimensional image drawing apparatus according to claim 7, further comprising:
a first object polygon position calculator (103) for calculating positions of the multiple polygons that form the first object (202) with reference to the position of the at least one bone (311) included in the first object (202),
wherein the image rendering system (103, 111, 112) further draws the multiple polygons that form the first object (202) according to the position calculated by the first object polygon position calculator (103) to create an image (200; 400) where the first and second objects are modelled.

9. The three-dimensional image drawing apparatus according to any of claims 1 to 8, further comprising:
an interruption generator (103) for generating an interruption for each frame period or each field period,
wherein the bone position calculator, the collision detector, the bone position corrector, the polygon position calculator, and the image rendering system start in response to the generated interruption.

10. A method for drawing a three-dimensional image by modelling a first object (202) and a second object (201; 500) that move in a virtual three-dimensional space, and the second object (201; 500) is connected to the first object (202) and includes a bone (301-305; 511-514, 521-524, 531-534, 541-544), the second object (201; 500) moving independently of the first object (202) at a portion other than a connection point, comprising the step of
calculating (S205) a position of the bone (301-305; 511-514, 521-524, 531-534, 541-544) included in the second object (201; 500) when the second object (201; 500) moves according to a predetermined operation condition;
**characterized in that**
said bone (301-305; 511-514, 521-524, 531-534, 541-544) defines display positions of multiple polygons; and by the steps of
setting (S106) a reference axis coordinate system (x, y, z) that is a three-dimensional coordinate system, one of the three axes of the reference axis coordinate system (x, y, z) being set as a reference axis (300) with reference to the first object (202), the reference axis coordinate system (x, y, z) being different from the coordinate system of the virtual three-dimensional space;
determining (S206, S207) whether the second object (201; 500) is where no collision with the first object (202) occurs, based upon the calculated position of the bone (301-305; 511-514, 521-524, 531-534, 541-544), by determining (S207) whether an angle, which the bone (301-305; 511-514, 521-524, 531-534, 541-544) included in the second object (201; 500) forms with the reference axis (300) set with reference to the first object (202), is within a range of a reference angle predetermined as an angle at which no collision with the first object (202) occurs, according to calculations using the reference axis coordinate system (x, y, z);
recalculating (S208) the position of the bone (301-305; 511-514, 521-524, 531-534, 541-544) included in the second object (201; 500) to be where no collision with the first object (202) occurs when the second object (201; 500) is determined as being where collision with the first object (202) occurs;
calculating (S108) a position of each of the multiple polygons that form the second object (201; 500) with reference to the position of the bone (301-305; 511-514, 521-524, 531-534, 541-544), which is located where no collision with the first object (202) occurs; and
drawing (S110) the multiple polygons that form the second object (201; 500) according to the calculated positions to create an image (200; 400) where the first and second objects are modelled.

11. A computer-readable storage medium storing a program for drawing a three-dimensional image by modelling a first object (202) and a second object (201; 500) that move in a virtual three-dimensional space, and the second object (201; 500) is connected to the first object (202) and includes a bone (301-305; 511-514, 521-524, 531-534, 541-544) defining display positions of multiple polygons, the second object (201; 500) moving independently of the first object (202) at a portion other than a connection point, the program causing a computer apparatus to execute a method according to claim 10.

12. A carrier wave superimposed on a data signal of a program for drawing a three-dimensional image by modelling a first object (202) and a second object (201; 500) that move in a virtual three-dimensional space, and the second object (201; 500) is connected to the first object (202) and includes a bone (301-305; 511-514, 521-524, 531-534, 541-544) defining display positions of multiple polygons, the second object (201; 500) moving independently of the first object (202) at a portion other than a connection point, wherein the program causes a computer apparatus to execute a method according to claim 10.

## Patentansprüche

1. Vorrichtung zum Zeichnen eines dreidimensionalen Bildes, mit der ein dreidimensionales Bild gezeichnet wird, indem ein erstes Objekt (202) und ein zweites Objekt (201; 500) modelliert werden, die sich in einem virtuellen dreidimensionalen Raum bewegen, wobei das zweite Objekt (201; 500) mit dem ersten Objekt (201) verbunden ist und einen Knochen (301-305; 511-514, 521-524, 531-534, 541-544) enthält, sich das zweite Objekt (201; 500) an einem anderen Abschnitt als einem Verbindungspunkt unabhängig von dem ersten Objekt (202) bewegt, und die Vorrichtung umfasst:
eine Knochenpositions-Berechnungseinrichtung (103), mit der eine Position des Knochens (301-305; 511-514, 521-524, 531-534, 541-544) berechnet wird, der in dem zweiten Objekt (201; 500) enthalten ist, wenn sich das zweite Objekt (201; 500) entsprechend einem vorgegebenen Funktionszustand bewegt; und
ein Bildwiedergabesystem (103, 111, 112);
**dadurch gekennzeichnet, dass**
der Knochen (301-305; 511-514, 521-524, 531-534, 541-544) Anzeigepositionen mehrerer Polygone definiert, und **dadurch gekennzeichnet, dass** die Vorrichtung des Weiteren umfasst
eine Einrichtung (103) zum Festlegen eines Bezugsachsen-Koordinatensystems, mit der ein Bezugsachsen-Koordinatensystem (x, y, z) festgelegt wird, das ein dreidimensionales Koordinatensystem ist, wobei eine der drei Achsen des Bezugsachsen-Koordinatensystems (x, y, z) als eine Bezugsachse (300) in Bezug auf das erste Objekt (202) festgelegt ist und sich das Bezugsachsen-Koordinatensystem (x, y, z) von dem Koordinatensystem des virtuellen dreidimensionalen Raums unterscheidet;
einen Kollisions-Detektor (103), mit dem auf Basis der berechneten Position des Knochens (301-305; 511-514, 521-524, 531-534, 541-544) festgestellt wird, ob sich das zweite Objekt (201; 500) dort befindet, wo keine Kollision mit dem ersten Objekt (202) stattfindet, wobei der Kollisions-Detektor (103) eine Winkel-Feststelleinrichtung enthält, mit der festgestellt wird, ob ein Winkel, den der Knochen (301-305; 511-514, 521-524, 531-534, 541-544), der in dem zweiten Objekt (201; 500) enthalten ist, mit der Bezugsachse (300) bildet, die in Bezug auf das erste Objekt (202) festgelegt ist, innerhalb eines Bereiches eines Bezugswinkels liegt, der als ein Winkel vorgegeben ist, bei dem entsprechend Berechnungen unter Verwendung des Bezugsachsen-Koordinatensystems (x, y, z) keine Kollision mit dem ersten Objekt (202) stattfindet;
eine Knochenpositions-Korrektureinrichtung (103), mit der die Position des Knochens (301-305; 511-514, 521-524, 531-534, 541-544), der in dem zweiten Objekt (201; 500) enthalten ist, so neu berechnet wird, dass sie sich dort befindet, wo keine Kollision mit dem ersten Objekt (202) stattfindet, wenn festgestellt wird, dass sich das zweite Objekt (201; 500) dort befindet, wo Kollision mit dem ersten Objekt (202) stattfindet; und
eine Einrichtung (103) zum Berechnen von Polygonpositionen, mit der eine Position jedes der mehreren Polygone, die das zweite Objekt (201; 500) bilden, in Bezug auf die Position des Knochens (301-305; 511-514, 521-524, 531-534, 541-544) berechnet wird, der sich dort befindet, wo keine Kollision mit dem ersten Objekt (202) stattfindet; und dadurch, dass
das Bildwiedergabesystem (103, 111, 112) die mehreren Polygone, die das zweite Objekt (201; 500) bilden, entsprechend den durch die Einrichtung (103) zum Berechnen von Polygonpositionen berechneten Positionen zeichnet, um ein Bild (200; 400) zu schaffen, in dem das erste und das zweite Objekt modelliert werden.

2. Vorrichtung zum Zeichnen eines dreidimensionalen Bildes nach Anspruch 1, wobei die Knochenpositions-Korrektureinrichtung (103) die Position des Knochens (301-305; 511-514, 521-524, 531-534, 541-544), der in dem zweiten Objekt (201; 500) enthalten ist, so neu berechnet, dass sie sich dort befindet, wo der Winkel mit dem Bezugswinkel übereinstimmt, wenn die Winkel-Feststelleinrichtung feststellt, dass sich der Winkel nicht innerhalb des Bereiches des Bezugswinkels befindet.

3. Vorrichtung zum Zeichnen eines dreidimensionalen Bildes nach Anspruch 1 oder 2, wobei das zweite Objekt (201; 500) in Reaktion auf eine von außen ausgeübte Kraft passiv bewegt wird.

4. Vorrichtung zum Zeichnen eines dreidimensionalen Bildes nach einem der Ansprüche 1 bis 3,
wobei das zweite Objekt (201; 500) einen ersten Knochen (301; 511, 521, 531, 541), der direkt mit dem ersten Objekt (202) verbunden ist, und einen zweiten Knochen (302; 512, 522, 532, 542) enthält, der direkt mit dem ersten Knochen (301; 511, 521, 531, 541) verbunden ist und nicht direkt mit dem ersten Objekt (202) verbunden ist; und
wobei der Kollisions-Detektor (103) enthält:
eine erste Winkel-Feststelleinrichtung, mit der festgestellt wird, ob ein Winkel, den der erste Knochen (301; 511, 521, 531, 541) mit einer Bezugsachse (300) bildet, innerhalb eines Bereiches eines ersten Bezugswinkels liegt;
eine zweite Winkel-Feststelleinrichtung, mit der festgestellt wird, ob ein Winkel, den der zweite Knochen (302; 512, 522, 532, 542) mit dem ersten Knochen (301; 511, 521, 531, 541) bildet, innerhalb eines Bereiches eines zweiten Bezugswinkels liegt; und
sie feststellt, dass sich das zweite Objekt (201; 500) dort befindet, wo keine Kollision mit dem ersten Objekt (202) stattfindet, wenn die erste und die zweite Winkel-Feststelleinrichtung feststellen, dass die Winkel innerhalb des ersten bzw. des zweiten Winkelbereiches liegen.

5. Vorrichtung zum Zeichnen eines dreidimensionalen Bildes nach Anspruch 4, wobei die Knochenpositions-Berechnungseinrichtung (103) enthält:
eine erste Knochenpositions-Berechnungseinrichtung, mit der eine Position des ersten Knochens (301; 511, 521, 531, 541) entsprechend einer Kraft berechnet wird, die auf Abschnitte ausgeübt wird, die dem ersten Knochen (301; 511, 521, 531, 541) und dem zweiten Knochen (302; 512, 522, 532, 542) des zweiten Objektes (201; 500) entsprechen; und
eine zweite Knochenpositions-Berechnungseinrichtung, mit der eine Position des zweiten Knochens (302; 512, 522, 532, 542) entsprechend einer Kraft berechnet wird, die auf einen Abschnitt ausgeübt wird, der dem zweiten Knochen (302; 512, 522, 532, 542) des zweiten Objektes (201; 500) entspricht.

6. Vorrichtung zum Zeichnen eines dreidimensionalen Bildes nach Anspruch 5, wobei die zweite Knochenpositions-Berechnungseinrichtung die Position des zweiten Knochens (302; 512, 522, 532, 542) in Bezug auf die neu berechnete Position des ersten Knochens (301; 511, 521, 531, 541) berechnet, wenn die Position des ersten Knochens (301; 511, 521, 531, 541) neu berechnet wird.

7. Vorrichtung zum Zeichnen eines dreidimensionalen Bildes nach einem der Ansprüche 1 bis 6,
wobei das erste Objekt (202) mehrere Polygone umfasst und wenigstens einen Knochen (311) enthält, der die Anzeigepositionen der mehreren Polygone definiert;
wobei die Vorrichtung des Weiteren umfasst:
eine Knochenpositions-Berechnungseinrichtung (103) für das erste Objekt, mit der eine Position des wenigstens einen Knochens (311) berechnet wird, der in dem ersten Objekt (202) enthalten ist, wenn sich das erste Objekt (202) entsprechend einem vorgegebenen Funktionszustand bewegt, der sich von dem Funktionszustand des zweiten Objektes (201; 500) unterscheidet; und
einen Bezugsachsen-Festlegeabschnitt (103), mit dem die Bezugsachse (300) entsprechend der Position des wenigstens einen Knochens (311) festgelegt wird, der in dem ersten Objekt (202) enthalten ist; und
wobei der Kollisions-Detektor (103) entsprechend einer Positionsbeziehung zwischen den Knochen (301-305; 511-514, 521-524, 531-534, 541-544), die in dem zweiten Objekt (201; 500) enthalten sind, und der Bezugsachse (300) feststellt, ob sich das zweite Objekt (201; 500) dort befindet, wo keine Kollision mit dem ersten Objekt (202) stattfindet.

8. Vorrichtung zum Zeichnen eines dreidimensionalen Bildes nach Anspruch 7, die des Weiteren umfasst:
eine Einrichtung (103) zum Berechnen von Polygonpositionen des ersten Objektes, mit der Positionen der mehreren Polygone, die das erste Objekt (202) bilden, in Bezug auf die Position des wenigstens einen Knochens (311) berechnet werden, der in dem ersten Objekt (202) enthalten ist,
wobei das Bildwiedergabesystem (103, 111, 112) des Weiteren die mehreren Polygone, die das erste Objekt (202) bilden, entsprechend der durch die Einrichtung (103) zum Berechnen von Polygonpositionen des ersten Objektes berechneten Position zeichnet, um ein Bild (200; 400) zu schaffen, in dem das erste und das zweite Objekt modelliert werden.

9. Vorrichtung zum Zeichnen eines dreidimensionalen Bildes nach einem der Ansprüche 1 bis 8, die des Weiteren umfasst:
eine Unterbrechungs-Erzeugungseinrichtung (103), mit der eine Unterbrechung für jede Vollbildperiode (frame period) oder jede Teilbildperiode (field period) erzeugt wird,
wobei die Knochenpositions-Berechnungseinrichtung, der Kollisions-Detektor, die Knochenpositions-Korrektureinrichtung, die Einrichtung zum Berechnen von Polygonpositionen und das Bildwiedergabesystem in Reaktion auf die erzeugte Unterbrechung starten.

10. Verfahren, mit dem ein dreidimensionales Bild gezeichnet wird, indem ein erstes Objekt (202) und ein zweites Objekt (201; 500) modelliert werden, die sich in einem virtuellen dreidimensionalen Raum bewegen, wobei das zweite Objekt (201; 500) mit dem ersten Objekt (202) verbunden ist und einen Knochen (301-305; 511-514, 521-524, 531-534, 541-544) enthält, sich das zweite Objekt (201; 500) an einem anderen Abschnitt als an einem Verbindungspunkt unabhängig von dem ersten Objekt (202) bewegt, und das Verfahren den Schritt umfasst:
Berechnen (S205) einer Position des Knochens (301-305; 511-514, 521-524, 531-534, 541-544), der in dem zweiten Objekt (201; 500) enthalten ist, wenn sich das zweite Objekt (201; 500) entsprechend einer vorgegebenen Funktionsbedingung bewegt;
**dadurch gekennzeichnet, dass**
der Knochen (301-305; 511-514, 521-524, 531-534, 541-544) Anzeigepositionen mehrerer Polygone definiert; und durch die folgenden Schritte:
Festlegen (S106) eines Bezugsachsen-Koordinatensystems (x, y, z), das ein dreidimensionales Koordinatensystem ist, wobei eine der drei Achsen des Bezugsachsen-Koordinatensystems (x, y, z) als eine Bezugsachse (300) in Bezug auf das erste Objekt (202) festgelegt ist und sich das Bezugsachsen-Koordinatensystem (x, y, z) von dem Koordinatensystem des virtuellen dreidimensionalen Raums unterscheidet;
Feststellen (S206, S207), ob sich das zweite Objekt (201; 500) dort befindet, wo keine Kollision mit dem ersten Objekt (202) stattfindet, auf Basis der berechneten Position des Knochens (301-305; 511-514, 521-524, 531-534, 541-544), indem festgestellt wird (S107), ob ein Winkel, den der Knochen (301-305; 511-514, 521-524, 531-534, 541-544), der in dem zweiten Objekt (201; 500) enthalten ist, mit der Bezugsachse (300) bildet, die in Bezug auf das erste Objekt (202) festgelegt ist, innerhalb eines Bereiches eines Bezugswinkels liegt, der als ein Winkel vorgegeben ist, bei dem entsprechend Berechnungen unter Verwendung des Bezugsachsen-Koordinatensystems (x, y, z) keine Kollision mit dem ersten Objekt (202) stattfindet;
Neuberechnen (S208) der Position des Knochens (301-305; 511-514, 521-524, 531-534, 541-544), der in dem zweiten Objekt (201; 500) enthalten ist, so, dass sie sich dort befindet, wo keine Kollision mit dem ersten Objekt (202) stattfindet, wenn festgestellt wird, dass sich das zweite Objekt (201; 500) dort befindet, wo Kollision mit dem ersten Objekt (202) stattfindet;
Berechnen (S108) einer Position jedes der mehreren Polygone, die das zweite Objekt (201; 500) bilden, in Bezug auf die Position des Knochens (301-305; 511-514, 521-524, 531-534, 541-544), der sich dort befindet, wo keine Kollision mit dem ersten Objekt (202) stattfindet; und
Zeichnen (S110) der mehreren Polygone, die das zweite Objekt (201; 500) bilden, entsprechend den berechneten Positionen, um ein Bild (200; 400) zu schaffen, in dem das erste und das zweite Objekt modelliert werden.

11. Computerlesbares Speichermedium, das ein Programm speichert, mit dem ein dreidimensionales Bild gezeichnet wird, indem ein erstes Objekt (202) und ein zweites Objekt (201; 500) modelliert werden, die sich in einem virtuellen dreidimensionalen Raum bewegen, wobei das zweite Objekt (201; 500) mit dem ersten Objekt (202) verbunden ist und einen Knochen (301-305; 511-514, 521-524, 531-534, 541-544) enthält, der Anzeigepositionen mehrerer Polygone definiert, sich das zweite Objekt (201; 500) an einem anderen Abschnitt als einem Verbindungspunkt unabhängig von dem ersten Objekt (202) bewegt, und das Programm eine Computervorrichtung veranlasst, ein Verfahren nach Anspruch 10 auszuführen.

12. Trägerwelle, die auf ein Datensignal eines Programms aufgelegt wird, mit dem ein dreidimensionales Bild gezeichnet wird, indem ein erstes Objekt (202) und ein zweites Objekt (201; 500) modelliert werden, die sich in einem virtuellen dreidimensionalen Raum bewegen, und das zweite Objekt (201; 500) mit dem ersten Objekt (202) verbunden ist und einen Knochen (301-305; 511-514, 521-524, 531-534, 541-544) enthält, der Anzeigepositionen mehrerer Polygone definiert, sich das zweite Objekt (201; 500) an einem anderen Abschnitt als einem Verbindungspunkt unabhängig von dem ersten Objekt (202) bewegt, und das Programm eine Computervorrichtung veranlasst, ein Verfahren nach Anspruch 10 auszuführen.

## Revendications

1. Appareil de dessin d'image tridimensionnelle pour dessiner une image tridimensionnelle en modélisant un premier objet (202) et un second objet (201 ; 500) qui se déplacent dans un espace tridimensionnel virtuel, et le second objet (201 ; 500) est relié au premier objet (202) et comprend une arête (301-305 ; 511-514, 521-524, 531-534, 541-544), le second objet (201 ; 500) se déplaçant indépendamment du premier objet (202) au niveau d'une partie autre qu'un point de liaison, comprenant :
un calculateur de position d'arête (103) pour calculer une position de l'arête (301-305 ; 511-514, 521-524, 531-534, 541-544) comprise dans le second objet (201 ; 500) lorsque le second objet (201 ; 500) se déplace selon une condition d'opération prédéterminée ; et
un système de rendu d'image (103, 111, 112) ;
**caractérisé en ce que**
ladite arête (301-305 ; 511-514, 521-524, 531-534, 541-544) définit des positions d'affichage de multiples polygones ; et par le fait de comprendre en outre
un moyen d'établissement de système de coordonnées à axe de référence (103) pour établir un système de coordonnées à axe de référence (x, y, z) qui est un système de coordonnées tridimensionnel, un des trois axes du système de coordonnées à axe de référence (x, y, z) étant établi comme un axe de référence (300) en référence au premier objet (202), le système de coordonnées à axe de référence (x, y, z) étant différent du système de coordonnées de l'espace tridimensionnel virtuel ;
un détecteur de collision (103) pour déterminer si le second objet (201 ; 500) est là où aucune collision avec le premier objet (202) ne se produit, sur la base de la position calculée de l'arête (301-305 ; 511-514, 521-524, 531-534, 541-544) ; où ledit détecteur de collision (103) comprend un déterminateur d'angle pour déterminer si un angle, que l'arête (301-305 ; 511-514, 521-524, 531-534, 541-544) comprise dans le second objet (201 ; 500) forme avec l'axe de référence (300) établi en référence au premier objet (202), est dans une étendue d'un angle de référence prédéterminé comme un angle auquel aucune collision avec le premier objet (202) ne se produit, selon des calculs utilisant le système de coordonnées à axe de référence (x, y, z) ;
un correcteur de position d'arête (103) pour recalculer la position de l'arête (301-305 ; 511-514, 521-524, 531-534, 541-544) comprise dans le second objet (201 ; 500) comme étant là où aucune collision avec le premier objet (202) ne se produit lorsque le second objet (201 ; 500) est déterminé comme étant là où une collision avec le premier objet (202) se produit ; et
un calculateur de position de polygone (103) pour calculer une position de chacun des multiples polygones qui forment le second objet (201 ; 500) en référence à la position de l'arête (301-305 ; 511-514, 521-524, 531-534, 541-544), qui est située là où aucune collision avec le premier objet (202) ne se produit ; et **en ce que**
ledit système de rendu d'image (103, 111, 112) dessinant les multiples polygones qui forment le second objet (201 ; 500) selon les positions calculées par le calculateur de position de polygone (103) afin de créer une image (200 ; 400) où les premier et second objets sont modélisés.

2. Appareil de dessin d'image tridimensionnelle selon la revendication 1, dans lequel le correcteur de position d'arête (103) recalcule la position de l'arête (301-305 ; 511-514, 521-524, 531-534, 541-544) comprise dans le second objet (201 ; 500) pour être là où l'angle concorde avec l'angle de référence lorsque le déterminateur d'angle détermine que l'angle n'est pas dans l'étendue de l'angle de référence.

3. Appareil de dessin d'image tridimensionnelle selon la revendication 1 ou 2, dans lequel le second objet (201 ; 500) est déplacé passivement en réponse à une force appliquée extérieurement.

4. Appareil de dessin d'image tridimensionnelle selon l'une quelconque des revendications 1 à 3,
dans lequel le second objet (201 ; 500) comprend une première arête (301 ; 511, 521, 531, 541) qui est directement reliée au premier objet (202) et une seconde arête (302 ; 512, 522, 532, 542) qui est directement reliée à la première arête (301 ; 511, 521, 531, 541) et n'est pas directement reliée au premier objet (202) ; et
dans lequel le détecteur de collision (103) comprend :
un premier déterminateur d'angle pour déterminer si un angle, que la première arête (301 ; 511, 521, 531, 541) forme avec un axe de référence (300), est dans une étendue d'un premier angle de référence ;
un second déterminateur d'angle pour déterminer si un angle, que la seconde arête (302 ; 512, 522, 532, 542) forme avec la première arête (301 ; 511, 521, 531, 541), est dans une étendue d'un second angle de référence ; et
détermine que le second objet (201 ; 500) est là où aucune collision avec le premier objet (202) ne se produit lorsque les premier et second déterminateurs d'angle déterminent que les angles sont dans les étendues des premier et second angles, respectivement.

5. Appareil de dessin d'image tridimensionnelle selon la revendication 4, dans lequel le calculateur de position d'arête (103) comprend :
un calculateur de position de première arête pour calculer une position de la première arête (301 ; 511, 521, 531, 541) selon une force appliquée à des parties correspondant à la première arête (301 ; 511, 521, 531, 541) et à la seconde arête (302 ; 512, 522, 532, 542) du second objet (201 ; 500) ; et
un calculateur de position de seconde arête pour calculer une position de la seconde arête (302 ; 512, 522, 532, 542) selon une force appliquée à une partie correspondant à la seconde arête (302 ; 512, 522, 532, 542) du second objet (201 ; 500).

6. Appareil de dessin d'image tridimensionnelle selon la revendication 5, dans lequel le calculateur de position de seconde arête calcule la position de la seconde arête (302 ; 512, 522, 532, 542) en référence à la position recalculée de la première arête (301 ; 511, 521, 531, 541) lorsque la position de la première arête (301 ; 511, 521, 531, 541) est recalculée.

7. Appareil de dessin d'image tridimensionnelle selon l'une quelconque des revendications 1 à 6,
dans lequel le premier objet (202) comprend de multiples polygones et comprend au moins une arête (311) qui définit les positions d'affichage des multiples polygones ;
dans lequel l'appareil comprend en outre :
un calculateur de position d'arête de premier objet (103) pour calculer une position de la au moins une arête (311) comprise dans le premier objet (202) lorsque le premier objet (202) se déplace selon une condition d'opération prédéterminée différente de la condition d'opération du second objet (201 ; 500) ; et
une section d'établissement d'axe de référence (103) pour établir l'axe de référence (300) selon la position de la au moins une arête (311) comprise dans le premier objet (202) ; et
dans lequel le détecteur de collision (103) détermine si le second objet (201 ; 500) est là où aucune collision avec le premier objet (202) ne se produit selon une relation de position entre les arêtes (301-305 ; 511-514, 521-524, 531-534, 541-544) comprises dans le second objet (201 ; 500) et l'axe de référence (300).

8. Appareil de dessin d'image tridimensionnelle selon la revendication 7, comprenant en outre :
un calculateur de position de polygone de premier objet (103) pour calculer des positions des multiples polygones qui forment le premier objet (202) en référence à la position de la au moins une arête (311) comprise dans le premier objet (202),
dans lequel le système de rendu d'image (103, 111, 112) dessine en outre les multiples polygones qui forment le premier objet (202) selon la position calculée par le calculateur de position de polygone du premier objet (103) afin de créer une image (200 ; 400) où les premier et second objets sont modélisés.

9. Appareil de dessin d'image tridimensionnelle selon l'une quelconque des revendications 1 à 8, comprenant en outre :
un générateur d'interruption (103) pour générer une interruption pour chaque période de trame ou chaque période de champ,
dans lequel le calculateur de position d'arête, le détecteur de collision, le correcteur de position d'arête, le calculateur de position de polygone, et le système de rendu d'image commencent en réponse à l'interruption générée.

10. Procédé pour dessiner une image tridimensionnelle en modélisant un premier objet (202) et un second objet (201 ; 500) qui se déplacent dans un espace tridimensionnel virtuel, et le second objet (201 ; 500) est relié au premier objet (202) et comprend une arête (301-305 ; 511-514, 521-524, 531-534, 541-544), le second objet (201 ; 500) se déplaçant indépendamment du premier objet (202) au niveau d'une partie autre qu'un point de liaison, comprenant l'étape consistant à
calculer (S205) une position de l'arête (301-305 ; 511-514, 521-524, 531-534, 541-544) comprise dans le second objet (201 ; 500) lorsque le second objet (201 ; 500) se déplace selon une condition d'opération prédéterminée ;
**caractérisé en ce que**
ladite arête (301-305 ; 511-514, 521-524, 531-534, 541-544) définit des positions d'affichage de multiples polygones ; et par les étapes consistant à
établir (S106) un système de coordonnées à axe de référence (x, y, z) qui est un système de coordonnées tridimensionnel, un des trois axes du système de coordonnées à axe de référence (x, y, z) étant établi comme un axe de référence (300) en référence au premier objet (202), le système de coordonnées à axe de référence (x, y, z) étant différent du système de coordonnées de l'espace tridimensionnel virtuel ;
déterminer (S206, S207) si le second objet (201 ; 500) est là où aucune collision avec le premier objet (202) ne se produit, sur la base de la position calculée de l'arête (301-305 ; 511-514, 521-524, 531-534, 541-544) ; en déterminant (S207) si un angle, que l'arête (301-305 ; 511-514, 521-524, 531-534, 541-544) comprise dans le second objet (201 ; 500) forme avec l'axe de référence (300) établi en référence au premier objet (202), est dans une étendue d'un angle de référence prédéterminé comme un angle auquel aucune collision avec le premier objet (202) ne se produit, selon des calculs utilisant le système de coordonnées à axe de référence (x, y, z) ;
recalculer (S208) la position de l'arête (301-305 ; 511-514, 521-524, 531-534, 541-544) comprise dans le second objet (201 ; 500) comme étant là où aucune collision avec le premier objet (202) ne se produit lorsque le second objet (201 ; 500) est déterminé comme étant là où une collision avec le premier objet (202) se produit ;
calculer (S108) une position de chacun des multiples polygones qui forment le second objet (201 ; 500) en référence à la position de l'arête (301-305 ; 511-514, 521-524, 531-534, 541-544), qui est située là où aucune collision avec le premier objet (202) ne se produit ; et
dessiner (S110) les multiples polygones qui forment le second objet (201 ; 500) selon les positions calculées afin de créer une image (200 ; 400) où les premier et second objets sont modélisés.

11. Support de stockage lisible par ordinateur stockant un programme pour dessiner une image tridimensionnelle en modélisant un premier objet (202) et un second objet (201 ; 500) qui se déplacent dans un espace tridimensionnel virtuel, et le second objet (201 ; 500) est relié au premier objet (202) et comprend une arête (301-305 ; 511-514, 521-524, 531-534, 541-544) définissant des positions d'affichage de multiples polygones, le second objet (201 ; 500) se déplaçant indépendamment du premier objet (202) au niveau d'une partie autre qu'un point de liaison, le programme amenant un appareil informatique à exécuter un procédé selon la revendication 10.

12. Onde porteuse superposée sur un signal de données d'un programme pour dessiner une image tridimensionnelle en modélisant un premier objet (202) et un second objet (201 ; 500) qui se déplacent dans un espace tridimensionnel virtuel, et le second objet (201 ; 500) est relié au premier objet (202) et comprend une arête (301-305 ; 511-514, 521-524, 531-534, 541-544) définissant des positions d'affichage de multiples polygones, le second objet (201 ; 500) se déplaçant indépendamment du premier objet (202) au niveau d'une partie autre qu'un point de liaison, où le programme amène un appareil informatique à exécuter un procédé selon la revendication 10.
